# EUROPÄISCHE PATENTSCHRIFT

(11) **EP 0 685 385 B1**
(45) Veröffentlichungstag und Bekanntmachung des Hinweises auf die Patenterteilung: **02.09.1998**
(21) Anmeldenummer: 95101807.6
(22) Anmeldetag: 10.02.1995
(51) Int. Cl.: B62J 17/04

(54) **Einrichtung zum Verstellen eines Windschildes für Fahrzeuge**
Device for adjusting a windshield for vehicles
Dispositif de réglage d'un pare-brise pour véhicules

(30) Priorität: 31.05.1994 DE 4418954
(43) Veröffentlichungstag der Anmeldung: 06.12.1995
(73) Patentinhaber: Bayerische Motoren Werke Aktiengesellschaft, 80788 München (DE)
(72) Erfinder: Greger, Martin, D-85757 Karlsfeld (DE)

(56) Entgegenhaltungen:
- DE-A- 3 941 875
- DE-U- 8 607 843
- US-A- 4 696 509

## Beschreibung

Die Erfindung bezieht sich auf eine Einrichtung zum Verstellen eines Windschildes für Fahrzeuge, insbesondere für Motorräder nach dem Oberbegriff des Hauptanspruchs.

Eine derartige Einrichtung ist aus der DE-C2 39 41 875 bekannt. Zur Verstellung sind bei dieser Ausführung wenigstens zwei in Längsrichtung des Fahrzeuges angeordnete Führungsschienen in unterschiedlichen Ebenen geneigt. In den Führungsschienen laufen Gleitstücke, an denen wiederum schwenkbar der Windschild gehalten ist. Durch die unterschiedlich geneigten Führungsschienen läßt sich der Windschild sowohl in seiner Höhe als auch in seiner Neigung verstellen.

Durch die beträchtliche Anzahl der Einzelteile: Führungsschiene, Gleitsteine, Befestigungselemente usw., erweist sich der Windschild als recht aufwendig in der Konstruktion und daher auch teuer in der Herstellung. Außerdem weist die ganze Anordnung ein unerwünscht hohes Gewicht auf. Schließlich neigt die bekannte Ausführung zum Klemmen, sobald sich Schmutz oder Staub in die Führungsschienen ansammelt.

Aufgabe der Erfindung ist es daher, eine Windschildverstellung aufzuzeigen, die unter Beibehaltung der Höhen- und Neigungsverstellung einfach aufgebaut ist und zuverlässig arbeitet.

Die Aufgabe wird erfindungsgemäß mit den kennzeichnenden Merkmalen des Hauptanspruchs gelöst. Vorteilhafte Ausgestaltungen der Erfindung ergeben sich aus den Unteransprüchen.

Die vorliegende Erfindung verzichtet auf Schienen entsprechend dem Stand der Technik. Stattdessen verwendet sie Führungslenker, die unter Bildung eines Viergelenks den Windschild in seiner Lage veränderbar am Fahrzeugaufbau halten. Da es sich bei den Gelenken um reine Drehgelenke handelt, sind sie weitgehend unempfindlich gegen Schmutz. Andererseits ergibt sich durch die Anstellung und die Länge der einzelnen Führungslenker für die Bewegungsbahn des Windschildes ein großer Spielraum. Voraussetzung für einen einwandfreien Bewegungsablauf ist die Lage bzw. Ausrichtung der Schwenkachsen des Viergelenks; sie verlaufen im wesentlichen horizontal und quer zur Fahrzeuglängsrichtung.

Durch die Verwendung von Führungslenkern kann der Windschild in seiner Lage einfach eingestellt werden. Er läßt sich somit problemlos als Wind- und Wetterschutz an die Fahrergröße bzw. Sitzbankhöheneinstellung anpassen. Die Verstellung läßt sich sowohl manuell als auch durch andere technische Hilfsmittel, wie Elektromotor, Hydraulik usw. verwirklichen. Bei einer manuellen Verstellmöglichkeit braucht das Windschild lediglich vom Fahrer nach oben gezogen bzw. nach unten gedrückt werden. Es hat sich in diesem Fall als zweckmäßig erwiesen, die Verstellung zweistufig auszulegen, also lediglich eine obere und eine untere Endlage vorzusehen. In einer vorteilhaften Ausführung sichert eine Übertotpunktfeder den Windschild in der jeweiligen Endlage. Darüber hinaus werden durch diese Feder Toleranzen in dem Verstellsystem eliminiert.

Desweiteren ist es möglich, auch eine Verstellung des Windschilds in Zwischenlagen zuzulassen. In den jeweiligen Endlagen bzw. in den möglichen Zwischenlagen ist es weiter vorteilhaft, den Windschild zu verriegeln, so daß er nicht durch den Fahrtwind verstellt wird. Durch eine entsprechend eingestellte Reibung in den Gelenken kann allerdings eine solche Verriegelung auch entfallen.

Bei einer elektromotorischen Ausführung ist zweckmäßigerweise eine stufenlose Einstellung vorzusehen. Durch selbsthemmende Zwischengetriebe ist der Windschild in jeder Position sicher gehalten. Eine Verstellung durch den Fahrtwind wird so verhindert.

Die Erfindung kommt mit einem Satz Führungslenker aus. Allerdings kann es aus Stabilitätsgründen wünschenswert sein, einen weiteren Satz hinzuzufügen. In diesem Fall ist es von Vorteil, eine Trägerleiste an der Innenseite des Windschildes zu befestigen. An der im wesentlichen horizontal verlaufenden und sich über einen großen Teil der Breite des Windschildes erstreckenden Trägerleiste werden die einzelnen Führungslenker an jeder Seite gelenkig gelagert.

Bei dieser Ausführung ist es weiter von Vorteil, die unteren Führungslenker über eine stangenförmige Welle drehfest miteinander zu verbinden. An der Welle kann in weiterer vorteilhafter Ausgestaltung der Erfindung ein Zwischengetriebe angeordnet werden, das wiederum von dem Elektromotor betätigt wird.

Durch den einfachen Aufbau läßt sich die Verstelleinrichtung ohne große Veränderung der Bauteile an verschiedene Fahrzeugtypen anpassen. Dies resultiert in einem größtmöglichen, kostengünstigen Gleichteileprinzip. Die Verstelleinrichtung insgesamt ist durch ihren Aufbau kosten- und gewichtsreduziert, zeichnet sich durch eine einfache Mechanik aus und erlaubt kostengünstige Teile, wie Kunststoffteile usw. zu verwenden.

Weitere vorteilhafte Ausgestaltungen der Erfindung ergeben sich aus der nachfolgenden Beschreibung eines Ausführungsbeispiels und der dazugehörigen Zeichnung. Es zeigen:
- Figur 1: in perspektivischer Darstellung den vorderen Abschnitt eines Motorrades bzw. dessen Verkleidung mit einem elektrisch verstellbaren Windschild und
- Figur 2: einen Abschnitt einer manuellen Windschildverstellung

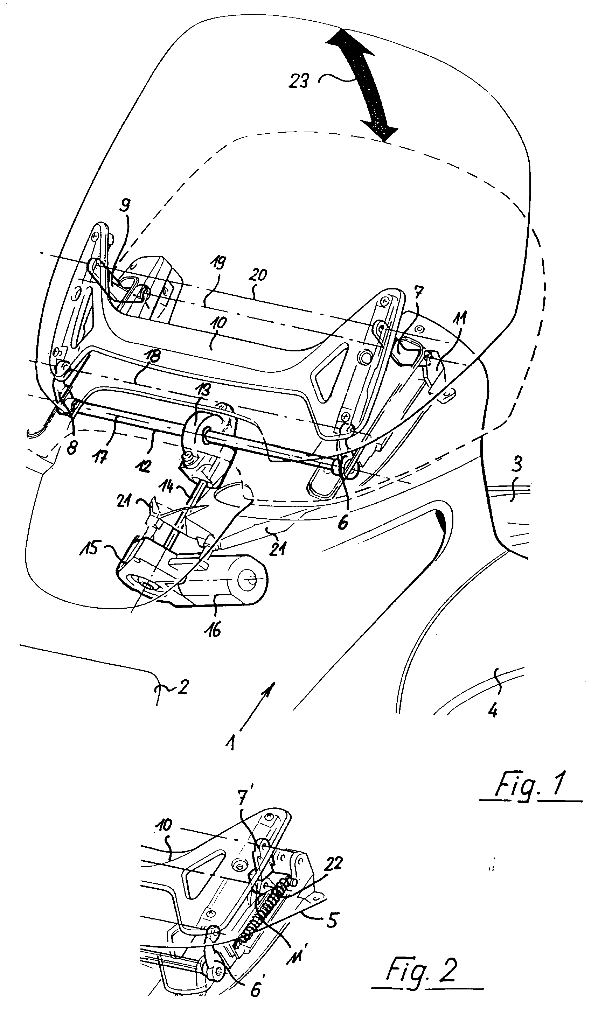

Eine Verkleidung 1 nach Figur 1 weist mehrere Teilabschnitte auf. Eine Öffnung 2 ist für die Aufnahme eines Hauptscheinwerfers vorgesehen, in einem weiteren Abschnitt 4 ist ein nicht weiter erkennbarer Rückblickspiegel angeordnet. Hinter der Verkleidung befindet sich ein nicht sichtbarer Motorradlenker, dahinter ist ein Kraftstofftank 3 angedeutet.

Am oberen Abschnitt geht die Verkleidung 1 in einen Windschild 5 über, der in seiner Höhe und Neigung verstellbar ist, wie dies mit einem Doppelpfeil 23 gezeigt ist. In der Zeichnung ist mit ausgezogenen Strichen eine obere Endlage des Windschildes 5 dargestellt, während gestrichelt gezeichnet, die untere Lage des Windschildes 5 erkennbar ist. Die Aufgabe des Windschildes 5 ist es, den Fahrtwind vom Fahrer fernzuhalten bzw. über ihn hinwegzuleiten. Je nach Bedarf kann der Fahrer das Windschild tiefer und flacher oder höher und steiler einstellen.

Hierzu ist eine Einrichtung zum Verstellen des Windschildes 5 vorgesehen, die in ihrem Kern aus zwei Sätzen von Führungslenkern 6, 7 und 8, 9 besteht. Bei jedem Satz Führungslenker sind die beiden Lenker - in der flächigen Ausdehnung des Windschildes 5 gesehen - übereinander angeordnet. Übereinander bedeutet demnach, daß, projiziert auf eine senkrechte Fahrzeugmittenebene, der Führungslenker 7 über dem Führungslenker 6 und der Führungslenker 9 über dem Führungslenker 8 liegt.

Desweiteren ist für die Anbindung der Führungslenker eine Trägerleiste 10 im unteren Abschnitt an der Innenseite des Windschildes 5 befestigt. Die Trägerleiste 10 erstreckt sich horizontal über einen großen Teil der Breite des Windschildes 5. Sie hat die Form eines auseinandergezogenen H's wobei an den beiden senkrechten Schenkeln des H's die Führungslenker 6, 7 und 8, 9 über je ein Drehgelenk gelagert sind. Auf diese Weise ergibt sich eine sichere Verbindung der Lenker mit dem Windschild.

Mit ihren anderen Enden sind die Lenker 7 und 9 über fahrzeugfeste Lagerböcke 11 drehbar am Fahrzeugaufbau gelagert. Der Vollständigkeit halber sei darauf hingewiesen, daß in der Darstellung nur einer der Lagerböcke 11, nämlich der rechte erkennbar ist. Die Lagerböcke sind dabei auf einer nicht gezeichneten Trägerplatte befestigt, die wiederum mit einem als Verkleidungshalter dienenden, ebenfalls nicht dargestellten Rohrgestänge verbunden ist. Dadurch werden die auf den Windschild wirkenden Windkräfte aufgenommen.

Die der Trägerleiste 10 gegenüberliegenden Enden der unteren Führungslenker 6 und 8 verbindet drehfest eine stangenförmige, in sich drehbare Welle 12 drehfest miteinander. Durch diese gelenkige Anbindung stellt jeder Satz Führungslenker 6 und 7 bzw. 8 und 9 ein Gelenkviereck dar, wobei alle Drehachsen im wesentlichen horizontal ausgerichtet sind. Um einen einwandfreien Bewegungsablauf zu erhalten, ist es angezeigt, die einzelnen Drehachsen der beiden Gelenkvierecke zusammenfallen zu lassen. Die sich so ergebenden gemeinsamen Achsen sind in Figur 1 mit 17, 18, 19 und 20 bezeichnet. Dabei ist die Drehachse 17 zugleich die Achse der Welle 12.

Die Welle 12 ist in ihrer Lage fest dem Fahrzeugaufbau zugeordnet und hierfür etwa in ihrer Mitte in einem fahrzeugfesten Gehäuse 13 gelagert. Sie kann darüber hinaus noch an weiteren Stellen gelagert sein, was allerdings in der Zeichnung nicht dargestellt ist. Das Gehäuse 13 umschließt ein Zwischengetriebe, das aus einem auf der Welle 12 verdrehfest gehaltenen (nicht erkennbaren) Zahnrad besteht, das mit einem anderen ebenfalls nicht erkennbaren Zahnrad kämmt. Dieses zweite Zahnrad wird über eine weitere Drehwelle 14 angetrieben. Die Drehwelle 14 führt zu einem in einem Gehäuse untergebrachten zweiten Zwischengetriebe 15. Das Zwischengetriebe 15 schließlich wird von einem im gleichen Gehäuse angeordneten Elektromotor 16 angetrieben. Das Gehäuse selbst ist mit aufbaufesten Teilen verbunden, wie dies mit 21 angedeutet sein soll.

Der Elektromotor 16 läßt sich über einen nicht erkennbaren Schalter am Lenkrad einschalten. Er bewegt je nach Schalterbetätigung über die Zwischengetriebe 15 und 13 den Windschild 5 nach oben oder nach unten. Bewegt sich der Windschild 5 beispielsweise nach oben, drehen die Welle 12 und damit die Führungslenker 6 und 8 bzw. 7 und 9 gegen den Uhrzeigersinnn. Die Drehzahl des Elektromotors 16 muß gegenüber der Drehwelle 12 stark untersetzt werden. Aufgrund dieser Untersetzung sind die Zwischengetriebe 15 und 13 selbsthemmend, das heißt eine einmal eingestellte Position des Windschildes 5 wird auch nicht durch den Druck des Fahrtwindes verstellt. Schließlich befinden sich im Zwischengetriebe Endlagenschalter, die eine Verstellung der Führungslenker 6, 7, 8 und 9 über die Endlagen hinaus verhindert.

In Figur 2 ist abschnittsweise eine manuelle Verstellung des Windschildes 5 dargestellt. Es sind wieder Führungslenker 6' und 7' erkennbar. Der Führungslenker 7' ist dabei als doppelarmiger Winkelhebel ausgeführt und mit seinem Winkelknie in einem Lagerbock 11' drehbar gehalten. Der eine Arm des Lenkers 7' greift, wie in Figur 1, gelenkig an der Trägerleiste 10 an, während am anderen Arm eine Zugfeder 22 eingehängt ist. Das andere Ende der Zugfeder 22 ist an einem aufbaufesten Abschnitt gehalten.

Der Windschild 5 nach Figur 2 läßt sich nur in eine obere und eine untere Endlage verstellen. Hierzu wird er lediglich mit der Hand nach oben gezogen bzw. nach unten gedrückt. Die Zugfeder 22 wirkt aufgrund ihrer Anbindung an dem einen Winkelarm des Lenkers 7' als Übertotpunktfeder, die den Windschild 5 sowohl in der unteren als auch in der oberen Lage sicher hält. Während des Verstellvorganges verschwenkt sich der Lenker 7' bzw. sein mit der Zugfeder 22 verbundener Winkelarm und beschreibt einen Kreisbogen. Die Feder 22 wird gedehnt bis einem Scheitelpunkt, der in etwa einer mittigen Stellung des Windschildes zwischen oberen und unteren Endlage entspricht. In dieser Stellung ist die Lage des Windschildes 5 instabil und die Zugfeder 22 zieht den Lenker 7' und damit das Windschild entweder in die eine oder die andere stabile Endlage.

Für diese Endlagen besitzen die Lenker 6' und 7' Endanschläge, die einen sicheren Halt in der jeweiligen Position, bzw. Beschädigen der Lackteile oder Klappern der Einzelteile verhindern. Toleranzen im Verstellsystem werden außerdem über die Feder 22 eliminiert.

Im übrigen ist der Verstellmechanismus der manuellen Verstellung in vergleichbarer Art wie nach Figur 1 aufgebaut. Insbesondere ist neben den Lenkern 6' und 7' auf der anderen Seite ebenfalls ein Lenkerpaar vorhanden, das gleich aufgebaut ist und an dem hinteren, oberen Lenker greift ebenfalls einer der Zugfeder 22 vergleichbare Feder an.

## Patentansprüche

1. Einrichtung zum Verstellen eines Windschildes für Fahrzeuge, insbesondere für Motorräder, mit der das Windschild in seiner Höhe und Neigung verstellbar und hierfür gelenkig an in ihrer Lage veränderbaren Betätigungselementen angeordnet ist, dadurch gekennzeichnet, daß die Betätigungselemente aus mindestens zwei - in der flächigen Ausdehnung des Windschildes (5) gesehen - übereinander angeordneten Führungslenker (6, 7 und 8, 9) bestehen, die unter Bildung eines Viergelenks einerseits mit dem Windschild (5) und andererseits mit dem Fahrzeugaufbau gelenkig verbunden sind und daß ihre im wesentlichen horizontal ausgerichteten Schwenkachsen quer zur Fahrzeuglängsmitte verlaufen.

2. Einrichtung nach Anspruch 1, dadurch gekennzeichnet, daß das Windschild (5) stufenlos zwischen einer unteren und einer oberen Endlage einstellbar ist.

3. Einrichtung nach Anspruch 1 oder 2, dadurch gekennzeichnet, daß das Windschild (5) in den Positionen zwischen der oberen und unteren Endlage arretierbar ist.

4. Einrichtung nach einem der Ansprüche 1 bis 3, dadurch gekennzeichnet, daß der untere Führungslenker (6 und 8) elektromotorisch betätigbar ist.

5. Einrichtung nach einem der Ansprüche 1 bis 4, dadurch gekennzeichnet, daß im unteren Abschnitt an der Innenseite des Windschildes eine Trägerleiste (10) befestigt ist, die quer zur Fahrzeuglängsachse verläuft und daß an jedem Endabschnitt der Trägerleiste (10) je ein Satz übereinander angeordneter Führungslenker (6, 7 und 8, 9) gelenkig gelagert sind.

6. Einrichtung nach Anspruch 5, dadurch gekennzeichnet, daß die unteren Führungslenker (6 und 8) mit einer horizontal verlaufenden, stangenförmigen und drehbaren Welle (12) drehfest miteinander verbunden sind.

7. Einrichtung nach Anspruch 4 und 6, dadurch gekennzeichnet, daß auf der Welle (12) drehfest ein Zahnrad angeordnet ist, das mit einem elektromotorisch angetriebenen Zahnrad kämmt.

8. Einrichtung nach Anspruch 7, dadurch gekennzeichnet, daß zwischen dem Elektromotor (16) und dem antreibenden Zahnrad eine weitere Drehwelle (14) zwischengeschaltet ist.

9. Einrichtung nach Anspruch 8, dadurch gekennzeichnet, daß der Elektromotor (16) über ein Zwischengetriebe (15) die Drehwelle (14) antreibt.

10. Einrichtung nach einem der Ansprüche 1, 2 oder 5, dadurch gekennzeichnet, daß das Windschild (5) manuell in eine obere und eine untere Endlage verstellbar ist.

11. Einrichtung nach Anspruch 10, dadurch gekennzeichnet, daß am oberen Führungslenker (7') eine Übertotpunkt-Feder (22) angreift.

## Claims

1. A device for adjusting a wind-shield for motor vehicles, especially for motorcycles, for adjusting the wind-shield vertically and in inclination and pivotably disposed for this purpose on variable-position actuating elements, characterised in that the actuating elements comprise at least two guide rods (6, 7 and 8, 9) disposed one above the other when the wind-shield (5) is in the flat or low-down position and forming a four-bar linkage pivotably connected on the one hand to the wind-shield (5) and on the other hand to the vehicle body, and their substantially horizontally aligned axes of rotation extend transversely to the longitudinal centre of the vehicle.

2. A device according to claim 1, characterised in that the wind-shield (5) is steplessly adjustable between a bottom and a top end position.

3. A device according to claim 1 or claim 2, characterised in that the wind-shield (5) is lockable in positions between the top and the bottom end position.

4. A device according to any of claims 1 to 3, characterised in that the bottom guide rod (6 and 8) is movable by an electric motor.

5. A device according to any of claims 1 to 4, characterised in that a supporting strip (10) is fastened to the inside of the wind-shield in the lower portion and extends transversely to the longitudinal axis of the vehicle, and a set of superposed guide rods (6, 7 and 8, 9) are pivotably mounted on each end portion of the supporting strip (10).

6. A device according to claim 5, characterised in that the bottom guide rods (6 and 8) are non-rotatably interconnected by a horizontal rod-shaped rotatable shaft (12).

7. A device according to claims 4 and 6, characterised in that a gearwheel is disposed non-rotatably on the shaft (12) and co-operated with a gearwheel driven by an electric motor.

8. A device according to claim 7, characterised in that an additional rotary shaft (14) is inserted between the electric motor (16) and the driving gearwheel.

9. A device according to claim 8, characterised in that the electric motor (16) drives the rotary shaft (14) via an intermediate gear unit (15).

10. A device according to any of claims 1, 2 or 5, characterised in that the wind-shield (5) is manually adjustable in a top and a bottom end position.

11. A device according to claim 10, characterised in that an upper dead-centre spring (22) engages the top guide rod (7').

## Revendications

1. Installation pour régler un pare-brise de véhicule notamment de moto, de manière à régler la hauteur et l'inclinaison du pare-brise, l'installation comprenant des éléments d'actionnement reliés de façon articulée à une position variable,
caractérisée en ce que
- les éléments d'actionnement se composent d'au moins deux bras de guidage (6, 7 ; 8, 9) superposés (lorsqu'on considère l'extension à plat du pare-brise (5)), et ces bras forment un quadrilatère relié d'une part au pare-brise (5) et d'autre part au carénage du véhicule, et
- les axes de pivotement du quadrilatère, alignés essentiellement horizontalement, sont dirigés transversalement par rapport au milieu longitudinal du véhicule.

2. Installation selon la revendication 1,
caractérisée en ce que
le pare-brise (5) est réglable en continu entre une position de fin de course inférieure et une position de fin de course supérieure.

3. Installation selon l'une quelconque des revendications 1 ou 2,
caractérisée en ce que
le pare-brise (5) peut être bloqué dans les positions situées entre la position de fin de course supérieure et la position de fin de course inférieure.

4. Installation selon l'une quelconque des revendications 1 ou 3,.
caractérisée en ce que
le bras de guidage inférieur (6, 8) est actionné par un moteur électrique.

5. Installation selon l'une quelconque des revendications 1 ou 4,
caractérisée en ce qu'
- une barrette de support (10) est fixée dans le segment inférieur sur le côté intérieur du pare-brise, cette barrette étant transversale à l'axe longitudinal du véhicule et
- à chaque segment d'extrémité de la barrette de support (10) est articulé un jeu de bras de guidage (6, 7 et 8, 9) superposés.

6. Installation selon la revendication 5,
caractérisée en ce que
les bras de guidage inférieurs (6, 8) sont reliés solidairement en rotation par un axe (12) horizontal, en forme de barre, qui peut tourner.

7. Installation selon les revendications 4 et 6,
caractérisée en ce qu'
une roue dentée est solidaire en rotation de l'arbre (12), cette roue dentée engrenant avec une roue dentée entraînée par un moteur électrique.

8. Installation selon la revendication 7,
caractérisée par
un second axe de rotation (14) monté entre le moteur électrique (16) et la roue dentée d'entraînement.

9. Installation selon la revendication 8,
caractérisée en ce que
le moteur électrique (16) entraîne l'axe de rotation (14) par une transmission intermédiaire (15).

10. Installation selon l'une des revendications 1, 2 et 5,
caractérisée en ce que
le pare-brise (5) est réglable manuellement dans sa position supérieure ou sa position inférieure de fin de course.

11. Installation selon la revendication 10,
caractérisée en ce que
le bras supérieur (7') est soumis à l'action d'un ressort de déplacement de point mort (22).
